# EUROPEAN PATENT APPLICATION

(11) **EP 4 717 483 A1**
(43) Date of publication of application: **01.04.2026**
(21) Application number: 25204855.8
(22) Date of filing: 26.09.2025
(51) Int. Cl.: B60H 1/00

(54) **CAR PROVIDED WITH AN AIR-CONDITIONING SYSTEM HAVING A FAN DEVICE ARRANGED BEHIND THE PASSENGER COMPARTMENT**

(30) Priority: 30.09.2024 IT 202400021606
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

Car (1) having a passenger compartment (4), bounded at the rear by a rear wall (9), and a receptacle (16) arranged outside and behind said passenger compartment (4) to perform the function of a storage compartment or housing for a sunroof, wherein the car (1) is provided with an air-conditioning system (10) having a plurality of air vents in the passenger compartment (4), an air treatment unit (12) connected to the air vents, an outside air intake to suck air from an outside environment, an inside air intake (20) arranged at the rear wall (9) to suck air from the passenger compartment (4), and a fan device that is configured to suck air from at least one of the two intakes and to supply such air to the air treatment unit (12), the fan device is arranged outside the passenger compartment (4) and behind the receptacle (16), and communicates with the inside air intake (20) via a duct having a slit portion, which is arranged below the receptacle (16) and has a cross-section elongated along a horizontal axis (24) orthogonal to a median longitudinal plane of the car (1).

## Description

### CROSS-REFERENCE TO RELATED APPLICATIONS

This patent application claims priority from Italian patent application no. 102024000021606, filed on September 30, 2024, the entire disclosure of which is incorporated herein by reference.

### BACKGROUND

The present invention relates to a car provided with an air-conditioning system having a fan device arranged behind the passenger compartment.

### PRIOR ART

As is known, an air-conditioning system is present in motor vehicles, having the function of conditioning a passenger compartment by introducing treated air (heated, cooled, dehumidified and/or filtered) according to the desires of the driver and/or the passengers. To this end, the air-conditioning system comprises an air treatment unit, which is adapted to treat an airflow supplied by a supply device and subsequently introduced into the passenger compartment through a series of air vents.

Patent application EP3581411A1 discloses a sports car in which the air treatment unit and the fan device are arranged behind the passenger compartment. At the same time, above the passenger compartment a longitudinal beam is provided, among other things, to support an air supply duct, which connects the air vents to the air treatment unit.

Italian patent application IT 102023000018084, in the name of the same applicant, relates to an improved solution, in which the air vents are connected to the air treatment unit via supply ducts that extend through the side doors of the car.

The air-conditioning system of these known solutions comprises an outside air intake, configured to suck air from the external atmosphere, and an inside air intake, arranged at a rear zone of the passenger compartment to suck air, for example through a wall that bounds said passenger compartment at the rear. The outside air intake and the inside air intake are then connected to a three-way adjustment device, in turn connected to the fan device, to select the source of the airflow that needs to be conveyed towards the air vents.

There is a need to further improve the known solutions described here above, especially from the viewpoint of the layout of the ducts that connect the inside air intake to the fan device, so as to reduce the overall dimensions and to optimise the overall arrangement of the components of the air-conditioning system, and thus also the arrangement of all the other components provided at the rear zone of the car.

### DESCRIPTION OF THE INVENTION

The object of the present invention is to provide a car with an air-conditioning system having a fan device arranged behind the passenger compartment, which allows the aforesaid needs to be met.

According to the present invention, a car provided with an air-conditioning system having a fan device arranged behind the passenger compartment, as defined in claim 1, is provided.

The dependent claims describe preferred embodiments of the present invention and form an integral part of this description.

### BRIEF DESCRIPTION OF THE DRAWINGS

The present invention will now be described with reference to the appended drawings, which illustrate some non-limiting embodiments thereof, wherein:
- Figure 1 is a schematic and plan view of a car, provided with an air-conditioning system having a fan device arranged behind the passenger compartment, according to a preferred embodiment of the present invention;
- Figure 2 shows, in a side perspective, on an enlarged scale and in a simplified manner, a rear zone of the car of Figure 1;
- Figure 3 shows, from below and in perspective, several parts of Figure 2; and
- Figure 4 is a perspective view similar to Figure 2, with parts shown in cutaway according to a vertical cross-sectional plane identified by the line IV-IV in Figure 3.

### PREFERRED EMBODIMENTS OF THE INVENTION

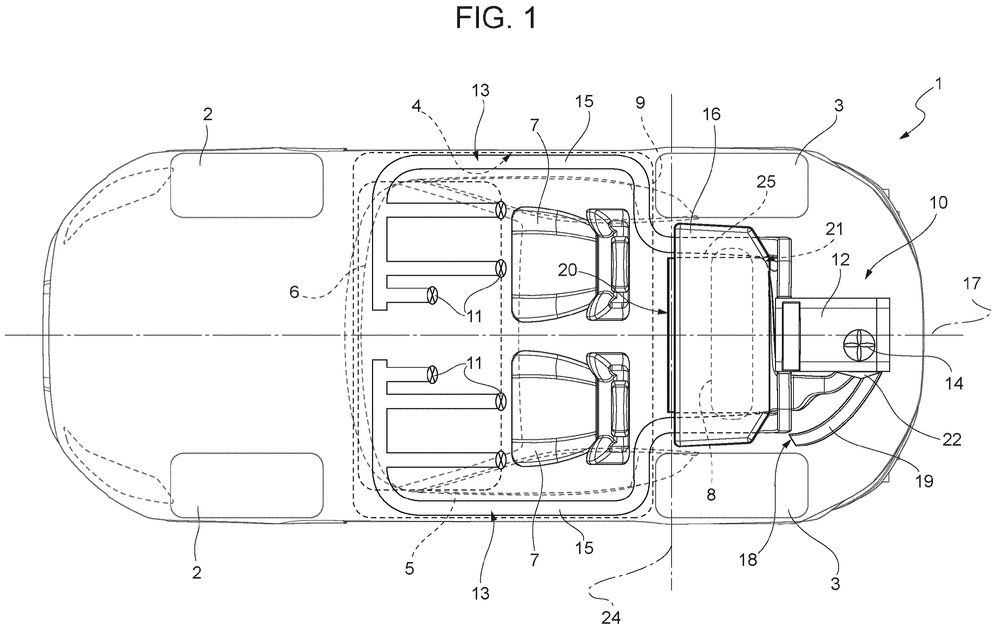

In Figure 1, the reference number 1 indicates, as a whole, a car (schematically and partially shown) having two front wheels 2 and two rear wheels 3. Preferably, the front wheels 2 can be idly rotating, or be driving wheels, whereas the rear wheels 3 are driving wheels.

The car 1 comprises a passenger compartment 4, which is arranged between the two front wheels 2 and the two rear wheels 3, is delimited at the front by a dashboard 5 and by a windscreen 6 arranged above the dashboard 5, and houses (at least) two seats 7. Furthermore, the passenger compartment 4 is delimited: above, by a roof (not shown) that is joined with the windscreen 6; behind, by a rear window 8 (i.e. a rear windowed part), which is joined with the roof, and by a wall 9 arranged below the rear window 8; and, on the side, by (at least) two doors (not shown).

The car 1 comprises an air-conditioning system 10 having the function of conditioning the inner volume of the passenger compartment 4, with particular attention to the volume at the seats 7 in which the occupants of the car 1 are seated.

The air-conditioning system 10 comprises a plurality of air vents 11 arranged inside the passenger compartment 4 and an air treatment unit 12 configured, in a known way and not described in detail, to treat an airflow that is subsequently introduced into the passenger compartment 4 through the air vents 11. In further detail, the air treatment unit 12 is configured to cool and/or to heat and/or to dehumidify the aforesaid airflow.

Furthermore, the air-conditioning system 10 comprises supply ducts 13, which connect the air treatment unit 12 to the air vents 11, and a fan device 14, configured to produce the airflow flowing through the air treatment unit 12. In particular, the fan device 14 includes a fan operated by an electric motor to produce a pressure causing the air to cross the air treatment unit 12 and to flow along the supply ducts 13 up until it exits through the air vents 11. More in particular, the air vents 11 are arranged in the dashboard 5.

For example, the air-conditioning system 10 comprises two supply ducts 13 having respective longitudinal portions 15 that extend along opposite sides of the passenger compartment 4, in a known way not described in detail (for example, through the side doors or in the sills, as in the known solutions).

The air treatment unit 12 and the fan device 14 are arranged outside the passenger compartment 4 and behind the passenger compartment 4 itself, in a position such as not to obstruct the driver's rear visibility through the rear window 8. In particular, they are arranged lower than the rear window 8, i.e. behind the wall 9 bounding the passenger compartment 4 at the rear. More in particular, the air treatment unit 12 and the fan device 14 are arranged behind a receptacle 16, which has an upper opening, closed in a manner not shown. The receptacle 16, in turn, is arranged outside and behind the passenger compartment 4, and in a central position between the right and left sidewalls, i.e. in a symmetrical position relative to a median longitudinal plane 17 of the car 1. The receptacle 16 is configured so as to perform a housing function for the roof, in the case in which the car 1 is a spider car having a sunroof, or a function of storage compartment, for example a baggage compartment.

Obviously, the receptacle 16 is also arranged in a position such as not to obstruct the driver's visibility through the rear window 8; for example, it is arranged lower than the rear window 8, behind the wall 9 that bounds the passenger compartment 4 at the rear.

The air-conditioning system 10 further comprises an outside air intake 18, arranged in a position such as to be able to suck air from an outside environment and communicating with the fan device 14 through a corresponding duct 19. Preferably, the outside air intake 18 is arranged alongside one side of the receptacle 16: this position is advantageous for sucking the outside air, since it is a zone with relatively "calm" air even when the car 1 is travelling at high speed.

According to an alternative, not shown, the outside air intake 18 could be arranged through a cover (not shown) that closes the receptacle 16 at the top: in this case, the duct 19 is divided into two parts (i.e. an initial part fixed to said cover, and a final part fixed relative to the roof of the car 1) which are separated when the receptacle 16 is opened, and which couple to each other once again, in fluid-tight manner, when the receptacle 16 is closed.

Furthermore, the air-conditioning system 10 comprises an inside air intake 20 that is arranged in the passenger compartment 4 at the wall 9, in order to suck air from said passenger compartment 4, and communicates with the fan device 14 via the corresponding duct 21.

In particular, the air-conditioning system 10 comprises an adjustment device 22, for example of the three-way type, having two inlets connected respectively to the ducts 19 and 21, and a singe outlet, connected to the air treatment unit 12 by means of the fan device 14 (in other words, the latter is interposed between the outlet of the adjustment device 22 and the inlet of the air treatment unit 12). Therefore, also the adjustment device 22 is arranged outside the passenger compartment 4 and behind the receptacle 16.

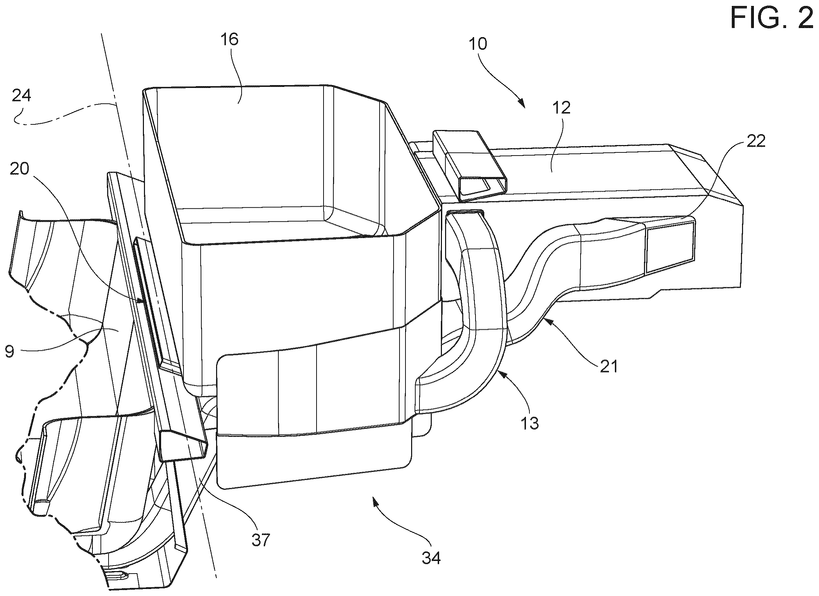

With reference to Figure 2, preferably, the inside air intake 20 is defined by a slit with elongated shape along a horizontal axis 24, orthogonal to the median longitudinal plane 17.

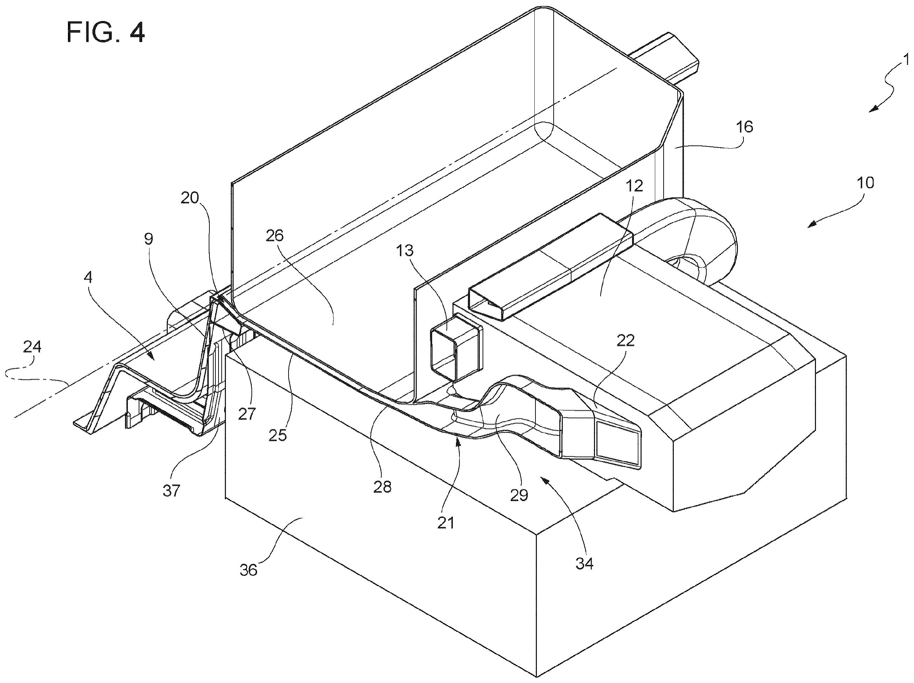

With reference to Figure 4, the duct 21 comprises a slit portion 25, i.e. a flat portion, having a cross-section elongated along the horizontal axis 24, in particular a cross-section with rectangular shape.

In particular, the slit portion 25 ends at the front with the outside air intake 20, and has the same height thereof. The slit portion 25 is arranged below a lower wall 26 of the receptacle 16 (i.e., in a position vertically aligned with the lower wall 26). Preferably, the slit portion 25 has a height and a cross-section that remain constant, along the longitudinal direction of the airflow sucked by the outside air intake 20. More preferably, the slit portion 25 and the lower wall 26 of the receptacle 16 are flat and parallel to one another. Even more preferably, the slit portion 25 directly faces the lower wall 26.

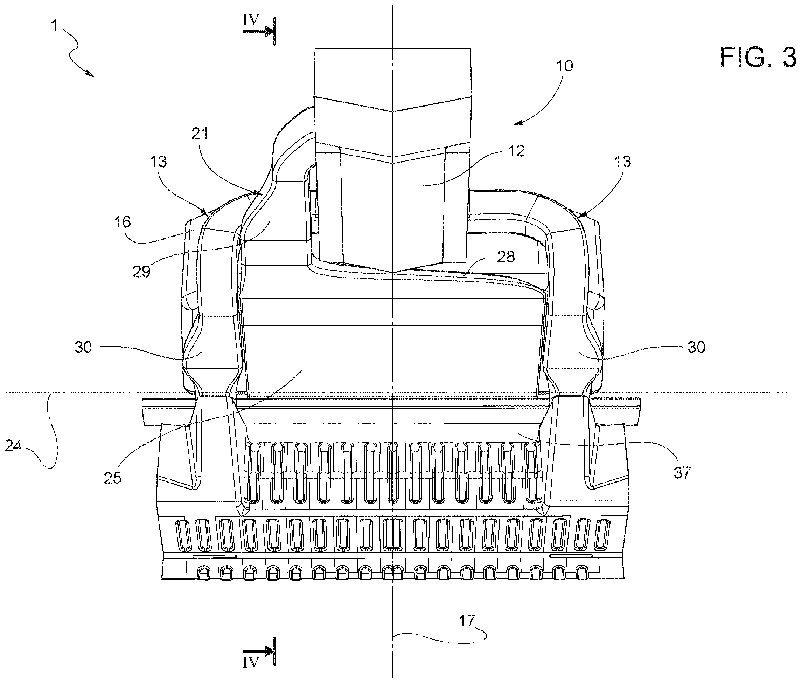

At its front end, where the outside air intake 20 is provided, the slit portion 25 is arranged on a supporting cross member 27, which extends along the horizontal axis 24, immediately behind the wall 9. With reference to Figure 3, at the rear end of the slit portion 25, the duct 21 continues with a tapered zone 28 having a width (along the horizontal axis 24) that progressively reduces. The duct 21 then comprises a joining portion 29 which joins the tapered zone 28 to the fan device 14 and is arranged behind the receptacle 16. In particular, as visible in Figure 4, at least in one section, the joining portion 29 has a height that progressively increases, going towards the fan device 14. At the same time, as visible in Figure 3, the width of the joining portion 29 (along the horizontal axis 24) can diminish progressively. More in particular, the joining portion 29 starts in an off-centre lateral position relative to the median longitudinal plane 17, and extends along one side of the air treatment unit 12.

Preferably, the two supply ducts 13 comprise respective joining portions 30 that are arranged outside and behind the passenger compartment 4 and communicate, at the front, with the longitudinal portions 15 and, at the back, with respective outlets of the air treatment unit 12: the slit portion 25 is arranged between the two joining portions 30 (along the horizontal axis 24); more preferably, also the joining portions 30 are arranged below the lower wall 26 of the receptacle 16, in substantially symmetrical positions relative to the median longitudinal plane 17 of the car 1.

With reference to Figure 4, the car 1 comprises a compartment 34 arranged outside the passenger compartment 4, behind the wall 9, and below the slit portion 25 and the receptacle 26, i.e. in a vertically aligned position. The compartment 34 is, in practice, a so-called engine compartment, since it has the function of housing a component 36 (schematically shown) defined by at least one of: a powertrain unit connected to the rear wheels 3, a battery pack for electric traction, an electronic unit for controlling the electric traction (inverter, transformers, etc.). The term "powertrain unit" is intended to mean any of an electric engine, a thermal engine, and a hybrid solution of these two engines. In fact, the car 1 is particularly suited to using electric traction on the wheels 2 and 3, but can also use an internal combustion engine arranged in the compartment 34. In particular, the compartment 34 is separated from the passenger compartment 4 by means of a so-called firewall, indicated with reference number 37. The firewall 37 forms part of the wall 9, or is arranged directly behind the wall 9, and, for example, extends downwards from the supporting cross member 27.

The arrangement and the configuration of the duct 21, described above, allow clear advantages to be obtained, particularly insofar as concerns reduction of the overall dimensions and optimisation of the arrangement for the components of the air-conditioning system 10 and, as a whole, the components of the car 1. In fact, the slit portion 25 of the duct 21, having a cross-section elongated along the horizontal axis 24 (and therefore a relatively limited height, with the same cross-section), is advantageously arranged in a relatively small space between the receptacle 16 and the compartment 34, so it does not occupy space at the sides of the receptacle 16 or behind the rear window 8. At the same time, the configuration and the position of the slit portion 25 provide more freedom in defining the layout of the other components, for example the layout of the supply ducts 13, the outside air intake 18 and the relative duct 19.

Furthermore, as indicated above, the car 1 can be designed and manufactured in a relatively simple way, also in the spider configuration, with sunroof, using the receptacle 16 without altering the configuration of the air-conditioning system 10.

In conclusion, it is clear that changes and variants may be made to the car 1 described and illustrated here without thus deviating from the scope of protection of the present invention, as defined in the appended claims.

In particular, the air treatment unit 12 could be arranged in a different position from the one described and illustrated, possibly in a remote position relative to the fan device 14 (theoretically, it could even be arranged in the dashboard 5); and/or the air vents 11 could be distributed in the passenger compartment 4 in different positions to the ones shown.

## Claims

1. Car (1) comprising:
- a passenger compartment (4) bounded at the rear by a rear wall (9);
- a receptacle (16) arranged outside and behind said passenger compartment (4), and defining a storage compartment and/or a housing for a sunroof;
- an air-conditioning system (10) comprising:
a) a plurality of air vents (11) arranged in the passenger compartment (4);
b) an air treatment unit (12) having at least one outlet connected to said air vents (11);
c) an outside air intake (18) arranged so as to suck air from an outside environment;
d) an inside air intake (20) arranged at said rear wall (9) to suck air from said passenger compartment (4);
e) a fan device (14) arranged outside and behind said passenger compartment (4), and configured to suck air from at least one of said outside air intake (18) and inside air intake (20) and supply an airflow to said air treatment unit (12); and
f) a duct (21) connecting said inside air intake (20) with said fan device (14);
**characterized in that** said fan device (14) is arranged behind said receptacle (16), and said duct (21) comprises a slit duct portion (25) arranged below said receptacle (16) and having a cross-section elongated along a horizontal axis (24) orthogonal to a median longitudinal plane (17) of the car (1).

2. The car according to claim 1, wherein said slit duct portion (25) has a rectangular cross-section.

3. The car according to claim 1 or 2, wherein said slit duct portion (25) has a constant height.

4. The car according to claim 3, wherein said slit duct portion (25) is flat and is parallel to a lower wall (26) of said receptacle (16).

5. The car according to any one of the preceding claims, wherein said inside air intake (20) has a configuration as a slot, elongated along said horizontal axis (24).

6. The car according to claim 5, wherein the height of said slit duct portion (25) is equal to the height of said inside air intake (20).

7. The car according to any one of the preceding claims, wherein said receptacle (16) and said slit duct portion (25) are arranged above a compartment (34), which is arranged outside said passenger compartment (4), behind said rear wall (9), and houses a component (36) defined by at least one of: a powertrain unit, a battery pack for electric traction, an electronic unit for control of the electric traction.

8. The car according to any one of the preceding claims, wherein said air treatment unit (12) is arranged externally to said passenger compartment (4) and behind said receptacle (16).

9. The car according to claim 8, wherein said duct (21) further comprises a joining portion (29), which extends towards said fan device (14) and is arranged behind said receptacle (16) and alongside a side of said air treatment unit (12).

10. The car according to any one of the preceding claims, wherein said outside air intake (18) is arranged alongside a side of said receptacle (16).
